Europäisches Patentamt

European Patent Office

Office européen des brevets

(19)

(11) Veröffentlichungsnummer: **0 145 861**
**B1**

(12) # EUROPÄISCHE PATENTSCHRIFT

(45) Veröffentlichungstag der Patentschrift:
**04.11.87**

(21) Anmeldenummer: **84111275.8**

(22) Anmeldetag: **21.09.84**

(51) Int. Cl.⁴: **G 01 L 9/00,** G 01 L 9/06,
G 01 L 9/12

(54) **Vorrichtung zum Messen von Drucken und zeitlichen Druckverläufen.**

(30) Priorität: **19.10.83 DE 3337978**

(43) Veröffentlichungstag der Anmeldung:
**26.06.85 Patentblatt 85/26**

(45) Bekanntmachung des Hinweises auf die Patenterteilung:
**04.11.87 Patentblatt 87/45**

(84) Benannte Vertragsstaaten:
**FR GB**

(56) Entgegenhaltungen:
**DE-A-2 423 297**
**DE-A-2 938 205**
**DE-A-3 011 269**

**ELEKTRONIK 20/8.10.1982 H. GUTGESELL "Si-Drucksensoren : genau und preiswert"**

(73) Patentinhaber: **Deutsche Forschungs- und Versuchsanstalt für Luft- und Raumfahrt e.V., Linder Höhe Postfach 90 60 58, D-5000 Köln 90 (DE)**

(72) Erfinder: **Bütefisch, Karl- Aloys, Dr. Dipl.- Phys., Hirtenweg 5, D-3406 Bovenden 1 (DE)**
Erfinder: **Ahlbrecht, Horst, Diedershäuser Strasse 16, D-3400 Göttingen (DE)**

(74) Vertreter: **Patentanwälte Dipl.- Ing. Rudolf Bibrach Dipl.- Ing. Elmar Rehberg, Pütterweg 6 Postfach 738, D-3400 Göttingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Messen von Drucken und zeitlichen Druckverläufen an der Oberfläche von Versuchsobjekten, z. B. Windkanalmodellen, Versuchsfahr- und -flugzeugen u. dgl., mit einer Mehrzahl auf einem Träger angeordneter druckempfindlicher Fühler.

Eine Vorrichtung der eingangs beschriebenen Art ist bekannt. Dabei sind auf einem Träger eine Vielzahl druckempfindlicher FFühler zeilen- und spaltenweise zusammengefaßt bzw. angeordnet, wobei jeder druckempfindliche Fühler aus einer Membrandose besteht. Weder der Träger noch die Fühler sind am Meßort angeordnet, sondern es ist jeweils erforderlich, den Meßort über jeweils einen Schlauch mit der jeweiligen Membrandose zu verbinden. Am Meßort besitzt das Versuchsobjekt ein kleines Loch in der entsprechenden Oberfläche von dem der jeweilige Druck über jeweils einen Schlauch zu dem eigentlichen Fühler auf dem Träger geleitet wird. Der Träger mit den druckempfindlichen Fühlern kann auch im zu untersuchenden Modell untergebracht werden, wobei dann der Vorteil besteht, daß sich die Schlauchleitungen u. U. stark verkürzen. Diese Anordnung ist jedoch nur dann möglich, wenn dies die Raumverhältnisse am Modell zulassen. Sind diese Raumverhältnisse allzu sehr beengt, bleibt nichts weiter übrig, als längere Schlauchleitungen in Kauf zu nehmen und den Träger mit den druckempfindlichen Fühlern außerhalb des Modells und der Meßstrecke anzuordnen, wobei wiederum das Problem der Durchführung der Schläuche vom Meßort durch die Meßstrecke entsteht. Die Anordnung der kleinen Löcher in der Oberfläche des Versuchsobjektes am Meßort kann die Oberfläche des Versuchsobjektes derart nachhaltig verändern, daß die zu messenden Größen, nämlich der Druck bzw. der zeitliche Druckverlauf schon allein hierdurch verfälscht wird. Aufgrund der notwendigen Schlauchleitungen werden aber in jedem Fall die u. U. schnell veränderlichen Druckverläufe stark beeinflußt, so daß eine Messung nur unter eingeschränkten Bedingungen und mit großem Aufwand möglich ist. Bei der Anordnung mehrerer Meßpunkte in der Oberfläche des zu untersuchenden Versuchsobjektes unter Verwendung der Schlauchleitungen zur Weiterleitung des Druckes mit u. U. unterschiedlichen Schlauchlängen ist es in jedem Fall erforderlich - sofern es sich nicht um stationäre Druckuntersuchungen handelt - Übertragungsfunktionen bei der Messung zu berücksichtigen, um überhaupt aussagekräfte Messungen vornehmen zu können. Diese bekannten Vorrichtungen erlauben zwar die Auswertung von Druckmessungen an mehreren Meßorten, sind aber mit der Unsicherheit von Fehlmessungen, verursacht durch die Übertragung in den Schlauchleitungen, behaftet und stellen auch keine Lösung dar, wie die Oberfläche des Versuchsobjektes am Meßort ohne negative Beeinflussung der Strömung gestaltet werden kann.

Andererseits ist versucht worden, druckempfindliche Fühler in Einzelbauweise bzw. Einzelanordnung zu miniaturisieren, um auf diese Art und Weise den Fühler näher am Meßort plazieren zu können. Die kleinsten druckempfindlichen Fühler haben einen Durchmesser von weniger als 1 mm bei einer Länge von ca. 20 mm. Sie besitzen eine Randwulst, die, wenn sie in der Oberfläche des Versuchsobjektes angeordnet wird, ebenfalls die Strömung stört und verfälscht. Trotz dieser relativ nahen Anordnung am Meßort ist die in dem druckempfindlichen Fühler enthaltene Membran hinter einem Hohlraum und noch in gewisser Entfernung von dem Meßort angeordnet. Die Anordnung des Hohlraumes bringt die Gefahr von Resonanz mit sich. Als weiterer Nachteil dieser miniaturisierten druckempfindlichen Fühler muß es gesehen werden, daß genügend Einbautiefe für ihre Erstreckung im Modell vorgesehen sein muß, was z. B. bei dünnen Tragflügeln nicht immer der Fall ist. Da die druckaufnehmende Membran auch hier nicht in der Oberfläche am Meßort angeordnet ist, ergeben sich insbes. bei schnell veränderlichen Drucken Störungen und Fehlmessungen. Weiterhin sind diese miniaturisierten druckempfindlichen Fühler sehr teuer, so daß sich von daher schon die Vielfachanordnung nebeneinander in der Oberfläche eines Versuchsobjekts verbietet.

Es ist zur Messung von Drucken auch bekannt, einzelne Piezo-Elemente, d. h. Kristalle, die bei Verformung infolge Druck elektrische Ladungen an ihrer Oberfläche entstehen lassen, in der Oberfläche am Meßort anzubringen. Von dem einzelnen Piezo-Element müssen dann zwei Leitungen zu einem ladungsempfindlichen Verstärker geführt werden, damit das Meßsignal weiterverarbeitet werden kann. Wenn mehrere piezo-Elemente und Leitungen nahe beieinander liegend angeordnet werden müssen, stören sich die abgegebenen zeitlich veränderlichen Signale gegenseitig, weil die Leitungen hochohmig sind. Das einzelne Signal ist dann nicht mehr allein der einzelnen Meßstelle zuzuordnen.

Aus der DE-A-2 938 205 ist eine Vorrichtung zum Messen eines einzelnen Drucks bzw. zeitlichen Druckverlaufs mit einem auf einem Träger angeordneten druckempfindlichen Fühler kapazitiver Bauart bekannt, wobei einen membranartig ausgebildete Metallbrücke aus der Oberfläche des Trägers vorsteht. Eine Kondensatorplatte ist unter der Membran auf der Oberfläche des Trägers angeordnet und über eine kurze Leitung mit einem Operationsverstärker verbunden, der als Bestandteil einer Auswerteschaltung auf der Rückseite des Trägers angeordnet sein kann. Der Operationsverstärker ist mit Anschlüssen zur Versorgung und zur Ableitung des einen Ausgangssignals versehen. Eine solche Vorrichtung gestattet nicht die Messung einer Vielzahl von Drucken oder zeitlichen Druckverläufen auf sehr engem Raum, obwohl es natürlich grundsätzlich möglich ist, auch diese Vorrichtung mehrfach nebeneinander anzuordnen. Die sich druckabhängig verformende Membran als eine Platte des Kondensators steht in die Strömung vor und verfälscht damit die Strömung. Die druckempfindliche Metallplatte stellt ein störungsanfälliges Bauteil dar, welches bei der bekannten Vorrichtung prinzipiell notwendig ist. Da diese druckempfindliche Metallplatte nach ihrer Herstellung nicht mehr nachbearbeitet werden kann, ist es auch nicht möglich, eine solche Vorrichtung beispielsweise in einer gekrümmten Oberfläche eines Versuchsobjekts oberflächenbündig anzuordnen.

Der Erfindung liegt die Aufgabe zugrunde, eine Vorrichtung zum Messen von Drucken und zeitlichen Druckverläufen derart weiterzubilden, daß es möglich wird, Druck und Druckverläufe in der Zeit an dicht beieinanderliegenden Meßstellen störungsfrei messen zu können, wobei einerseits keine Veränderung der Strömung durch die Meßstellenausbildung selbst erfolgen soll und andererseits eine störende gegenseitige Beeinflussung der Meßsignale vermieden werden muß. Schließlich soll die Vorrichtung auch vergleichsweise einfach am Versuchsobjekt unterbringbar und handhabbar sein.

Erfindungsgemäß wird dies durch die im Anspruch 1 niedergelegten Merkmale erreicht. Die druckempfindlichen Fühler werden zu mehreren dicht beieinander (ca. einige Millimeter) auf der Oberfläche eines Trägers angeordnet. Dieser Träger mit den Fühlern wird dann oberflächenbündig an der Meßstelle des Versuchsobjekts eingebaut, wobei die Oberfläche des Trägers, die teilweise von den Fühlern gebildet wird, zusammen mit der Oberfläche des Trägers im übrigen die Oberfläche des Versuchsobjekts genau ergänzen, so daß die Strömung durch die Anordnung der Meßvorrichtung keinerlei Veränderung erfährt. Jedem Fühler ist sein eigener Operationsverstärker zugeordnet, und zwar so, daß eine möglichst kurze Leitungsverbindung entsteht, so daß die Gefahr des Übersprechens weitgehend ausgeschaltet ist. Der die Oberseiten der Fühler mit dem Masseanschluß verbindende Überzug stellt nicht nur eine Leitung dar, sondern glättet gleichzeitig auch die Oberfläche an der Meßstelle. Die Meßanordnung wird damit gleichsam selbst ein Teil der Oberfläche, und zwar ein solches, welches nicht durch Löcher oder andere Durchbrüche gekennzeichnet ist. Gleichzeitig wird erreicht, daß unmittelbar am Meßort, also in der Oberfläche des Versuchsobjekts, gemessen wird, womit eine hohe Meßgenauigkeit erzielt wird. Die Berücksichtigung von Übertragungsfunktionen entfällt. Selbst wenn die Oberfläche eine Krümmung aufweist, kann auch der Träger entsprechend gekrümmt vorbereitet bzw. ausgebildet werden. Ein weiterer Vorteil der Erfindung liegt darin, daß sich die Herstellung von Versuchsobjekten vergleichsweise vereinfacht, da es genügt, an den zu untersuchenden Bereichen des Versuchsobjekts die Meßvorrichtung anzubringen und deren Anschluß zur Versorgung, Steuerung und Übertragung der Ausgangssignale vorzusehen. Die Meßvorrichtung kann auch in vergleichsweise dünne Versuchsobjekte eingebaut werden. Bei einem Defekt z. B. an einem der Fühler kann die Meßvorrichtung einschließlich des Trägers leicht ausgetauscht werden. Auch Veränderungen am Versuchsobjekt, z. B. eine Verlegung des Meßorts läßt sich im Vergleich zum Stand der Technik wesentlich einfacher durchführen.

Die bisher manchmal erforderliche Neuherstellung des gesamten Versuchobjektes entfällt.

Als druckempfindliche Fühler können Piezo-Elemente oder als Kapazitäten geschaltete Membrane vorgesehen sein. Die Piezo-Elemente sind Plättchen von einer Dicke von z. B. 0,2 mm aus z. B. modifiziertem Blei-Zinkonat-Titanat, deren Oberfläche metallisch bedampft ist. Bei Verformung dieses Plättchens z. B. durch Beaufschlagung mit einem Druck, entsteht eine elektrische Ladung, die über hochempfindliche Verstärker einer Messung zugeführt werden kann. Es ist auch die Anordnung von Membranen möglich, die elektrisch als Teil eines Kondensators geschaltet werden, so daß sich bei Druckbeaufschlagung die Kapazität ändert. Die Änderung kann entweder als Spannungsänderung in einer Brückenanordnung oder als Frequenzänderung in einer Schwingkreisanordnung aufgenommen werden, so daß sich auf diesem Wege eine Messung realisieren läßt.

Der Träger kann ein Halbleiterbaustein sein, der die Fühler und die Operationsverstärker aufweist und der in eine zugehörige Fassung einsteckbar ist. Die Meßvorrichtung läßt sich mit und ohne Fassung verwenden. Bei Verwendung einer Fassung entsteht der besondere Vorteil der leichten Austauschbarkeit am Meßort.

Der elektrisch leitende Überzug kann eine Aufdampf- oder Aufsprühschicht als Aluminium, Silber o. dgl. sein. Diese wird nach Einbau des Trägers in die Modellwandung aufgebracht, wobei er den oberflächenbündigen Anschluß der Meßvorrichtung an das Versuchsobjekt im Bereich der Meßstelle mit sich bringt. Der Überzug ist nur einige μm stark.

Die Erfindung wird anhand der Zeichnungen weiter erläutert. Es zeigen:

Fig. 1 eine Draufsicht auf die in das Versuchsobjekt eingebaute Meßvorrichtung,

Fig. 2 eine perspektivische Darstellung der Meßvorrichtung mit wesentlichen Einzelheiten,

Fig. 3 eine schematisierte Darstellung des Trägers mit den Fühlern,

Fig. 4 einen Schnitt gemäß der Linie IV-IV in

Fig. 1,

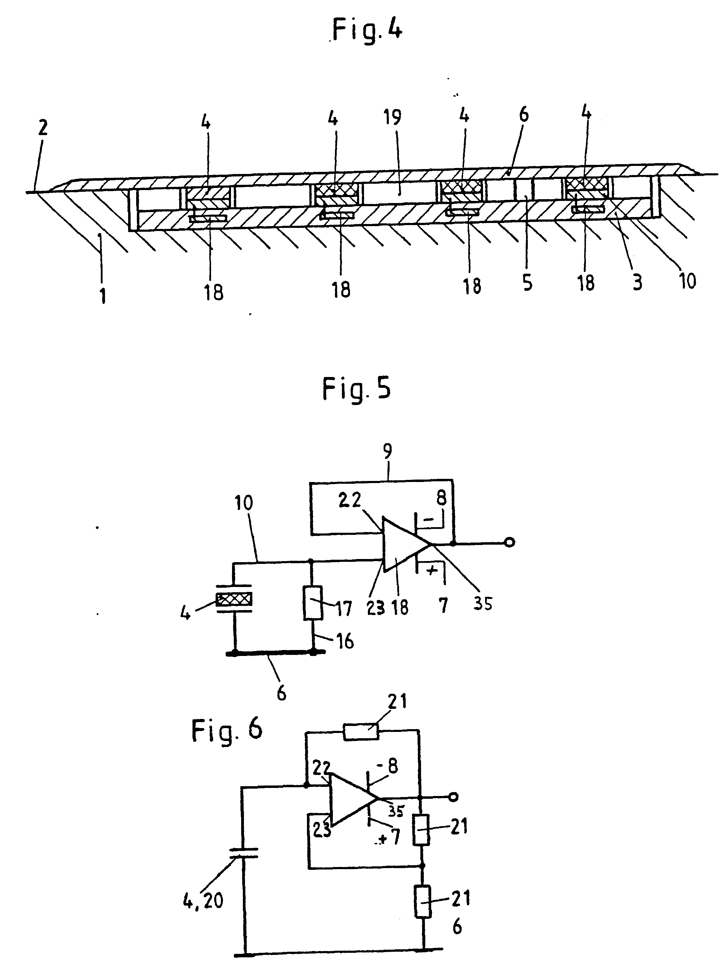

Fig. 5 den Schaltkreis eines einzelnen Piezo-Elementes mit sein zugehörigen Operationsverstarker, und

Fig. 6 den Schaltkreis eines einzelnen kapazitiven Fühlers in einer Schwingkreisanordnung mit seinem zugehörigen Operationsverstärker.

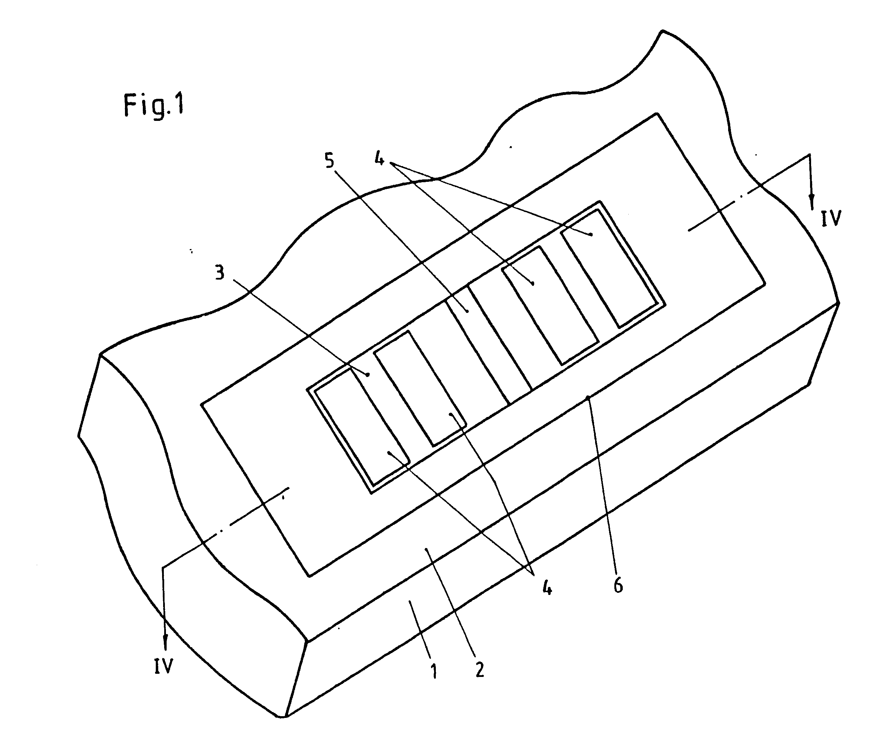

In Fig. 1 ist ein Ausschnitt aus einem Versuchsobjekt 1 dargestellt, an dessen Oberfläche 2 an vier relativ dicht beieinanderliegenden Stellen Drucke und Druckverläufe im Bereich der Oberfläche 2 gemessen werden sollen. Zu diesem Zweck ist der Träger 3 der Messvorrichtung mit vier Fühlern 4, die als Piezo-Elemente ausgebildet sind, oberflächenbündig zu der Oberfläche 2 des Versuchsobjektes 1 eingebaut. Auf der Oberfläche des Trägers 3 ist auch ein Masseanschluß 5 vorgesehen, der ebenso wie die Fühler 4 von einem Überzug 6, beispielsweise einer aufgedampften Aluminiumschicht, überzogen und geglättet ist. Der Überzug 6 ist elektrisch leitend. Er ergänzt bzw. glättet schließlich auch die Oberfläche 2 des Versuchsobjektes 1 am Meßort. Es versteht sich, daß die Anschlüsse und die entsprechenden Zu- und Ableitungen im Inneren des Versuchsobjektes 1 untergebracht sind. Genaueres wird anhand der folgenden Figuren erläutert.

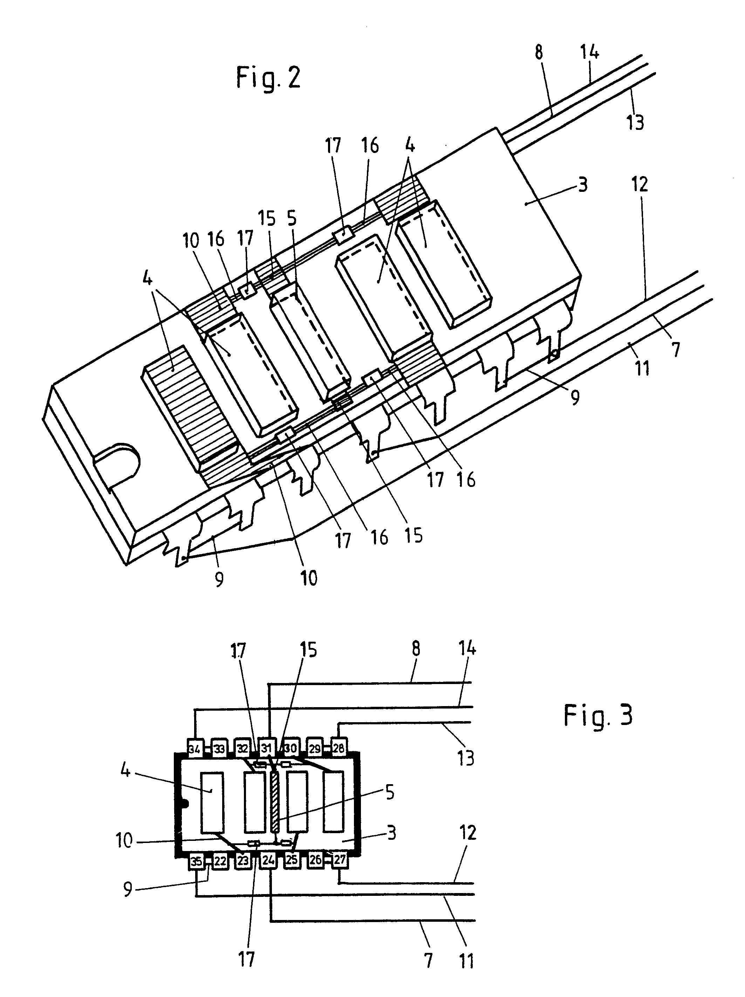

Fig. 2 zeigt den noch nicht am Meßort des Versuchsobjektes 1 eingebauten Träger 3 mit den vier Fühlern 4 und dem Masseanschluß 5 auf seiner Oberfläche. In dem Träger 3 unterhalb der Fühler 4 (nicht dargestellt) oder auch seitlich versetzt dazu ist jeweils ein Operationsverstärker vorgesehen, an den der Fühler 4 jeweils entsprechend angeschlossen ist. In Fig. 3 sind die Anschlüsse 22 bis 35 am Träger 3 vorgesehen. Zu den Anschlüssen 24 und 31 führen die Versorgungsleitungen 7 und 8, die letztlich an jeden der vier Operationsverstärker herangeführt sind. Jeder Operationsverstärker weist zwei Eingangsanschlüsse und einen Ausgangsanschluß auf. Der Fühler 4 besitzt die beiden Eingangsanschlüsse 22 und 23 und den Ausgangsanschluß 35. Der Eingangsanschluß 22 und der Ausgangsanschluß 35 sind durch eine Verbindungsleitung 9 verbunden. Eine Leitung 10 führt von der Unterseite des Fühlers 4 zu dem Eingangsanschluß 23 und über einen Eingangswiderstand 17 an den Masseanschluß 5. Am Ausgangsanschluß 35 ist die Ausgangsleitung 11 angeschlossen. Da auf dem Träger 1 vier Fühler 4 vorgesehen sind, ist diese Anordnung jeweils vierfach vorhanden, so daß sich zusätzlich die Ausgangsleitungen 12, 13, 14 ergeben. Für jeden Fühler 4 ist eine Leitung 16 vorgesehen, in der ein Eingangswiderstand 17 angeordnet ist. Alle Leitungen 16 sind über die Anschlüsse 15 mit dem Masseanschluß 5 verbunden. In Figur 2 ist dargestellt, daß diese Anordnung auf dem Träger 3 aufgebracht ist. Selbstverständlich läßt sich der Eingangswiderstand 17 auch integriert innerhalb des Trägers unterbringen. Die Leitungen 10 und Anschlüsse 15 können aufgedampfte oder aufgesprühte Silberschichten (Leitsilber, Leitkleber) sein.

Wie Figur 4 erkennen läßt, sind im Träger 3 etwa unterhalb der Fühler 4 Operationsverstärker 18 angeordnet. Jedes als Fühler 4 dienende Piezo-Element besitzt etwa eine Dicke von 0,2 mm. Die Leitung 10, die die Unterseite des jeweiligen Fühlers mit dem jeweiligen Operationsverstärker 18 verbinden, ist schematisch dargestellte. Sie weist eine Dicke von einigen µm auf. Der Überzug 6 ist stark vergrößert dargestellt, denn seine Dicke beträgt ebenfalls nur einige µm. Der Raum zwischen den Fühlern 4 kann durch eine elektrisch isolierende Ausfüllschicht 19, die die Fühler nicht berührt, geglättet sein, so daß letztendlich der aufgebrachte Überzug glatt und bündig mit der Oberfläche 2 des Versuchsobjekts 1 abschließt.

Figur 5 zeigt einen Schaltkreis eines einzelnen als Fühler ausgebildeten Piezo-Elements. Der Operationsverstärker 18 besitzt die beiden Eingänge 22 und 23 und den Ausgang 35. Er wird über die Leitungen 7 und 8 versorgt. Der Eingang 22 ist mit dem Ausgang 35 durch die Verbindungsleitung 9 verbunden. Die Leitung 10 führt vom Fühler 4 zum Eingangsanschluß 23 des Operationsverstärkers. Andererseits ist die Oberfläche des Fühlers 4 mit dem Überzug 6 verbunden. Parallel dazu ist der Eingangswiderstand 17 in der Leitung 16 vorgesehen.

Figur 6 zeigt einen Schaltkreis eines als Kapazität in einer Schwingkreisanordnung geschalteten Fühlers 4. Hierbei sind zusätzliche Widerstände 21 in dem Träger 3 untergebracht. Der als Fühler 4 dienende Kondensator 20 und der Kapazität wird dadurch gewonnen, daß eine dünne, elektrisch isolierende Folie auf dem Träger 3 aufgebracht wird. Damit wird die Anordnung insgesamt noch dünner.

**Bezugszeichenliste:**

1 = Versuchsobjekt
2 = Oberfläche
3 = Träger
4 = Fühler
5 = Masseanschluß
6 = Überzug
7 = Versorgungsleitung
8 = Versorgungsleitung
9 = Verbindungsleitung
10 = Leitung
11 = Ausgangsleitung
12 = Ausgangsleitung
13 = Ausgangsleitung
14 = Ausgangsleitung
15 = Leitung
16 = Leitung
17 = Eingangswiderstand
18 = Operationsverstärker

19 = Ausfüllschicht
20 = Kondensator
21 = Widerstand

## Patentansprüche

1. Vorrichtung zum Messen von Drucken und zeitlichen Druckverläufen an der Oberfläche von Versuchsobjekten, z. B. Windkanalmodellen, Versuchsfahr- und -flugzeugen u. dgl., mit einer Mehrzahl auf einem Träger (3) angeordneter druckempfindlicher Fühler (4), die oberflächenbündig miteinander und mit einem Masseanschluß (5) auf dem Träger (3) angeordnet sind, wobei dieser mitsamt den Fühlern (4) oberflächenbündig mit dem Versuchsobjekt (1) an der Meßstelle anzuordnen bestimmt ist, wobei im Träger (3) für jeden Fühler (4) ein Operationsverstärker (18) vorgesehen, die Unterseite jedes Fühlers (4) über eine möglichst kurze Leitung (10) mit seinem zugeordneten Operationsverstärker (18) verbunden ist, am Träger (3) Anschlüsse (24, 31) zur Versorgung der Operationsverstärker (18) sowie zur Ableitung der Ausgangssignale vorgesehen sind, und alle Oberseiten der Fühler (4) durch einen elektrisch leitenden Überzug (6) miteinander und mit dem zusammengefaßten Masseanschluß (5) der Operationsverstärker (18) verbunden sind.

2. Vorrichtung nach Anspruch 1, dadurch gekennzeichnet, daß als druckempfindliche Fühler (4) Piezo-Elemente oder als Kapazitäten geschaltete Membrane vorgesehen sind.

3. Vorrichtung nach Anspruch 1 und 2, dadurch gekennzeichnet, daß der Träger (3) ein Halbleiterbaustein ist, der die Fühler (4) und Operationsverstärker (18) aufweist und der in einer zugehörigen Fassung einsteckbar ist.

4. Vorrichtung nach Anspruch 1, dadurch gekennzeichnet, daß der elektrisch leitende Überzug (6) eine Aufdampf- oder Aufsprühschicht aus Aluminium, Silber o. dgl. ist.

## Claims

1. Device for measuring pressures and time-dependent pressure variations at the surfaces of test objects such as, for example, wind tunnel models, test vehicles, test aircraft and the like, this device possessing a plurality of pressure-sensitive sensors (4) which, together with a grounding connection (5), are arranged on a carrier (3) in a manner such that their surfaces are flush with one another, this carrier (3) being designed for installation at the measurement location, complete with the sensors (4) in a manner such that its surface is flush with that of the test object (1), one operational amplifier (18) per sensor (4) being provided inside the carrier (3) and the undersurface of each sensor (4) being connected to its dedicated operational amplifier (18) via a line (10) which is arranged to be short as possible, while connections (24, 31) are provided on the carrier (3), their function being to supply the operational amplifiers (18) and to tap off the output signals, and all the upper surfaces of the sensors (4) are interconnected via an electrically conducting coating (6) which also connects them to the integrated grounding connection (5) associated with the operational amplifiers (18).

2. Device according to Claim 1, characterized in that piezoelements or membranes are provided as pressure-sensitive sensors (4), any such membranes being connected in a manner whereby they form capacitances.

3. Device according to Claims 1 and 2, characterized in that the carrier (3) is a semiconductor module which comprises the sensors (4) and operational amplifiers (18), and which can be plugged into an appropriate holder.

4. Device according to Claim 1, characterized in that the electrically conducting coating (6) is a layer of aluminium or silver, or a layer of some similar substance, applied by vapour deposition or spraying.

## Revendications

1. Dispositif pour la mesure des pressions et des évolutions de pression dans le temps à la surface extérieure d'éprouvettes d'essai, par exemple des modèes pour soufflerier aérodynamiques, des véhicules et des avions d'essai et objets similaires, avec une pluralité de capteurs (4) sensibles à la pression disposés sur un support (3) réunis entre eux et avec un raccordement à la masse 5 par les surfaces sur le support (3), ce dernier étant destiné à être placé au lieu de mesure avec les capteurs (4) en constituant une surface formant corps avec celle de l'objet d'essai (1), un amplificateur opérationnel (18) étant prévu dans le support (3) pour chaque capteur (4), la face inférieure de chaque capteur (4) étant raccordée à l'amplificateur opérationnel (18) qui lui est affecté grâce à un conducteur (10) le plus court possible, des branchements (24, 31) étant prévus sur le support (3) pour l'alimentation de l'amplificateur opérationnel (18) ainsi que pour l'émission de signaux de départ, toutes les faces supérieures des capteurs (4) étant raccordées entre elles et à un raccordement à la masse (5) de l'amplificateur opérationnel (18), par un revêtement électriquement conducteur (6).

2. Dispositif selon la revendication 1, caractérisé par le fait que des piézo-éléments ou des membranes branchées comme des capacités sont prévus en tant que capteurs (4) sensibles à la pression.

3. Dispositif selon la revendication 1 ou 2, caractérisé par le fait que le support (3) est un composant semi-conducteur qui présente les capteurs (4) et les amplificateurs opérationnels (18) et qui peut être enfiché dans une monture adequate.

4. Dispositif selon la revendication 1, caractérisé par le fait que le revêtement (6) électriquement conducteur est une couche d'aluminium, d'argent ou d'un corps similaire vaporisée ou pulvérisée.

Fig.1

0 145 861

Fig. 2

Fig. 3

Fig. 4

Fig. 5

Fig. 6